Europäisches Patentamt

European Patent Office

Office européen des brevets

(19)

(11) Veröffentlichungsnummer: **0 108 828**
**B1**

(12) **EUROPÄISCHE PATENTSCHRIFT**

(45) Veröffentlichungstag der Patentschrift:
13.08.86

(21) Anmeldenummer: 82110545.9

(22) Anmeldetag: 16.11.82

(51) Int. Cl.⁴: **C 04 B 41/50,** C 04 B 28/24,
C 09 D 1/02

(54) Verfahren zur Sanierung von stahlbewehrtem Beton.

(43) Veröffentlichungstag der Anmeldung:
23.05.84 Patentblatt 84/21

(45) Bekanntmachung des Hinweises auf die Patenterteilung:
13.08.86 Patentblatt 86/33

(84) Benannte Vertragsstaaten:
AT BE CH DE FR GB IT LI LU NL SE

(56) Entgegenhaltungen:
DE-A-2 458 149
FR-A-1 252 609
GB-A-1 256 628

CHEMICAL ABSTRACTS, Band 88, 1978, Seite 78,
Zusammenfassung Nr. 122784w, COLUMBUS OHIO
(US)

(73) Patentinhaber: Schwiete, Rolf, Dr., Mainzer
Strasse 35, D-6084 Gernsheim/Rhein (DE)

(72) Erfinder: Schwiete, Rolf, Dr., Mainzer Strasse 35,
D-6084 Gernsheim/Rhein (DE)

(74) Vertreter: Ratzel, Gerhard, Dr., Seckenheimer
Strasse 36a, D-6800 Mannheim 1 (DE)

## Beschreibung

Die Erfindung betrifft ein Verfahren zur Sanierung von stahlbewehrtem Beton, wobei die freigelegten Bewehrungsstähle metallische blank entrostet, mit einem Rostschutzmittel grundiert und mit einem Reparaturmörtel überdeckt werden.

Die FR—A—1 252 609 betrifft die Bildung von Schutzschichten auf Eisen oder anderen Oberflächen, ausgehend von Gemischen eines feinverteilten Metalles, wie Zink oder Aluminium, und einer wässrigen Lösung eines Alkalimetallsilikates.

In "Chemical Abstracts", Vol. 88 (1978), Seite 78, Zusammenfassung Nr. 122784 w, ist eine Beschichtungskomposition aus Alkalisilikatbinder, pulverförmigen Zink und Phosphaten beschrieben.

Die DE—A 24 58 149 beschreibt eine flüssige Zusammensetzung für schnell härtende, wasserbeständige Überzüge, die Feststoffe, beispielsweise Pigmente, sowie Silikate und Metallstaub, beispielsweise Zinkstaub enthält.

Die GB—A 1 256 628 betrifft eine wässrige Lithiumsilikatlösung mit organischem Interpolymer-Latex sowie Beschichtungsmittel, die darüberhinaus Zinkstaub enthalten.

An Stahlbetonbauwerken können Betonschäden auftreten, die durch eine Korrosion des Bewehrungsstahles dieses Betons hervorgerufen werden. In zahlreichen Fällen ist ein Grund dafür, daß die nach der DIN 1045 vorgeschriebene Mindestüberdeckung des Bewehrungsstahles von 20 mm nicht eingehalten wurde. Nach der Carbonatisierung der überdeckenden Betonschicht und unter dem Einfluß saurer Luftinhaltsstoffe korrodieren die Bewehrungsstähle. Die bei der Korrosion auftretende Volumensvergrößerung, insbesondere des Rostes des Stahles sprengt dann die Überdeckungsschicht ab; sie kann auch ansonsten den Beton aufsprengen. Solche Schäden müssen behoben werden; denn einerseits wird der Bewehrungsstahl als solcher geschwächt und andererseits werden durch die Sprengrisse im Beton die üblichen statischen Funktionen dieses Betons in Frage gestellt. Somit wird dann bei fortschreitender Korrosion die gesamte Statik des Bauwerkes in Frage gestellt, was nicht nur gefährlich sondern bei Verlust eines Bauwerkes auch äußerst kostspielig ist.

Nach dem derzeitigen Stand der Technik werden zur Bekämpfung dieser Schäden die freigelegten Bewehrungsstähle metallisch blank entrostet, mit einer kunstharzgebundenen Rostschutzfarbe grundiert und mit einem kunstharzvergüteten Reparaturmörtel überdeckt. Jedoch birgt dieses bekannte Verfahren Risiken in sich. Bei nicht genügend verseifungsfesten Kunstharzen der Rostschutzgrundierung verliert diese wegen der hohen Zementalkalität bald ihre Schutzwirkung.

Der Überdeckungsmörtel haftet auch schlecht auf der organischen Rostschutzgrundierung. Daher wird in die noch frische Rostschutzgrundierung Quarzsand eingestreut, um die Haftung des Überdeckungsmörtels zu verbessern. Außerdem muß genau darauf geachtet werden, daß nur die Bewehrungsstähle mit der Rostschutzgrundierung bestrichen werden. Zur weiteren Verbesserung der Haftung ist es nötig dem Reparaturmörtel Kunstharze zuzufügen. Solche Reparaturmörtel haben aber eine andere Temperaturausdehnung als der Beton, so daß es bei Temperaturwechseln zu Abscherungen, Rissen und dergleichen kommen kann.

Demgegenüber liegt vorliegender Erfindung die Aufgabe zugrunde ein Verfahren zur Sanierung von stahlbewehrtem Beton zu liefern, das einen wirksamen und dauerhaften Schutz bewirkt, einfach anzuwenden und auch prophylaktisch wirksam ist und eine Sanierungsschicht ergibt, die bei guter Haftung sowohl auf dem Bewehrungsstahl als auch auf dem Beton in ihren übrigen Eigenschaften, z.B. Temperaturausdehnung, dem Beton möglichst nahekommt.

Diese Aufgabe wird erfindungsgemäß bei einem Verfahren der eingangs genannten Gattung dadurch gelöst, daß das Rostschutzmittel aus mindestens einer Metallstaubkomponente aus einem Metall oder mehreren Metallen, dessen bzw. deren Normalpotential negativer als desjenigen des Eisens ist und gegebenenfalls anorganischen Füllstoffen, besteht und daß nach Abbinden des Rostschutzmittels die Sanierungsstelle vorgenäßt und eine zementgebundener Reparaturmörtel auf die Sanierungsstelle gebracht wird.

Eine besondere Ausführungsform ist dadurch gekennzeichnet, daß der Reparaturmörtel keine Kunstharzzusätze enthält.

Fließfähigkeit beinhaltet dabei insbesondere auch streichfähig und spachtelfähig.

Das Betonsanierungsmittel kann streichfähig oder spachtelfähig sein, wie dies zur Verwendung des Sanierungsmittels im erfindungsgemäßen Verfahren erforderlich sein kann. Das silikatische Bindemittel kann hydrolysierter Kieselester, Natriumsilikat-Lösung, Kaliumsilikat-Lösung, Lithiumsilikat-Lösung, Ammoniumsilikat-Lösung oder Guanidinsilikat-Lösung sein; möglich sind auch Gemische dieser Silikat-Lösungen.

Möglich ist auch, daß das Betonsanierungsmittel zusätzlich anorganische Füllstoffe, wie z.B. Schwerspat, und/oder Quarzmehl und/oder Sand und/oder Ruß und/oder anorganische Farbpigmente, insbesondere Titandioxid enthält.

Als besonders geeignet hat sich eine Metallstaubkomponente aus Zinkstaub erwiesen. Demgemäß läßt sich insbesondere ein Betonsanierungsmittel bilden, das aus 50 bis 85 Gew.-% Zinkstaub und aus 50 bis 15% fließfähigem Silikat besteht.

Ein solches Betonsanierungsmittel wird erfindungsgemäß wie folgt angewendet.

Zunächst ist der Bewehrungsstahl des Betons metallisch blank zu machen; hierzu eignet sich das Sandstrahlen des Bewehrungsstahles. Dann wird der blanke Bewehrungsstahl mit dem Betonsanierungsmittel überzogen, gestrichen, gespachtelt, gespritzt oder dergleichen; sodann wartet man das Abbinden dieses Betonsanierungsmittels zunächst ab. Nach etwa 24 Stunden kann dies erfolgt sein. Dann wird die zu behandelnde Sanierungsstelle gründliche vorgenäßt und ein zementgebundener Reparaturmörtel eingebracht. Dabei braucht der verwendete Reparaturmörtel insbesondere keine Kunstharzzusätze wie bislang zu enthalten. Zweckmäßiger Weise kann dem Reparaturmörtel in geringen Mengen Betonverflüssiger beigefügt sein, um einen möglichst niedrigen Wasser-Zementwert zu erzielen.

Die so behandelten Bewehrungsstähle bleiben dann vor Korrosion geschützt, da dieser Schutz über viele Jahre hinaus anhält, zumal der Reparaturmörtel wie der Beton selbst zementgebunden ist und somit dem Beton in seinen Eigenschaften, insbesondere der Temperaturausdehnung, am ehesten entspricht. Der Reparaturmörtel haftet einwandfrei auch auf den Bewehrungsstählen, ohne daß es nötig ist, Maßnahmen für die Verbesserung dieser Haftung, wie z.B. das Bestreuen mit Quarzsand unter Zusatz von Kunststoffen zum Reparaturmörtel, vorzusehen. Es ist dabei auch ohne Einfluß auf die Haftung des Reparaturmörtels, wenn beim Streichen des Betonsanierungsmittels auf den Bewehrungsstahl der benachbarte Beton versehentlich ebenfalls mit dem Betonsanierungsmittel belegt wird.

Allgemein kann Bewehrungsstahl für Beton schon ansich mit einem Betonsanierungsmittel gemäß der Erfindung belegt sein; dieser Belag kann schon . vor dem Einbetonieren des Bewehrungsstahles aufgetragen sein, so daß später Betonschäden überhaupt infolge der Korrosion des Bewehrungsstahles nicht mehr zu befürchten sind.

Im folgenden sei ein Ausführungsbeispiel zu der Erfindung gegeben, anhand dessen auch die vorteilhaften Wirkungen bezüglich Korrosionsschutz dargetan sind:

Beispiel 1:

Es wurden drei Betonplatten mit den Außenmaßen 100×100×20 mm hergestellt; der Beton hierzu hatte einen Wasserzementwert von 0,38, bei einem Verhältnis Sand/Portland-Zement. von 3/1. Diese Platten wurden dann 8 Wochen bei Normalklima gelagert. Danach wurde je eine Platte auf einer Seite wie folgt gestrichen:

a) eine Platte mit einem Betonsanierungsmittel aus 82% Farbenzinkstaub und 18% Lithiumsilikat-Lösung;

b) eine Platte mit einer Zwei-Komponenten Rostschutzfarbe auf Epoxyd-Basis;

c) eine Platte mit der gleichen Rostschutzfarbe wie unter b), in de jedoch zusätzlich feiner Quarzsand eingestreut war.

Nach 2 Tagen Trocknung der Rostschutzbeläge wurde auf die gestrichenen Seiten der Platten jeweils 20 mm starker Keton aufgetragen. Jedoch war die entsprechende Seite der Platte unter a) vorher gut vorgenäßt worden. Der aufgetragene Beton hatte einen Wasserzementwert von 0.41, das Mischungsverhältnis Sand/Portland-Zement betrug 3/1. Diese Platten mit dem aufgetragenen Beton wurden dann wiederum 4 Wochen erst einmal gelagert. Danach wurden die Platten 2 Stunden in Wasser getaucht. Dabei trennten sich bereits bei der Platte nach b) die beiden Betonschichten voneinander. Die verbliebenen Platten zu a) und c) wurden dann Frost-Tau-Zyklen mit folgenden Werten ausgesetzt:

Frost-Periode 48 Stunden bei −8°C;

Tau-Periode 48 Stunden bei +20°C.

Nach drei Zyklen (Frieren-Tauen) hatten sich die beiden Betonschichten der Platte zu c) getrennt. Die Platte zu a) überstand sechs Zyklen, danach wurde der Versuch mit dieser Platte abgebrochen.

**Patentansprüche**

1. Verfahren zur Sanierung von stahlbewehrtem Beton, wobei die freigelegten Bewehrungsstähle metallisch blank entrostet, mit einem Rostschutzmittel grundiert und mit einem Reparaturmörtel überdeckt werden, dadurch gekennzeichnet, daß das Rostschutzmittel aus mindestens einem fließfähigen Silikat und mindestens einer Metallstaubkomponente aus einem Metall oder mehreren Metallen, dessen bzw. deren Normalpotential negativer als desjenigen des Eisens ist, und gegebenenfalls anorganischen Füllstoffen, besteht und daß nach Abbinden des Rostschutzmittels die Sanierungsstelle vorgenäßt und ein zementgebundener Reparaturmörtel auf die Sanierungsstelle gebracht wird.

2. Verfahren nach Anspruch 1, dadurch gekennzeichnet, daß der Reparaturmörtel keine Kunstharzzusätze enthält.

**Revendications**

1. Procédé de restauration de béton armé d'acier, dans lequel on dérouille les armatures d'acier découvertes en mettant le métal à nu, on leur applique une première couche d'antirouille et on les recouvre d'un mortier de restauration, caractérisé en ce que l'antirouille comprend au moins un silicate coulant (fluide) et au moins un constituant consistant en de la poudre métallique, comprenant un ou plusieurs métaux dont le potentiel normal (ou potentiel de référence fondamental) est plus négatif que celui du fer, et éventuellement des charges inorganiques, et en ce qu'après la prise (le durcissement) de l'antirouille, on mouille préalablement l'emplacement de restauration et l'on applique un mortier de restauration lié au ciment à l'emplacement de restauration.

2. Procédé selon la revendication 1, caractérisé en ce que le mortier de restauration ne renferme pas d'additifs de résine synthétique.

**Claims**

1. A method for making good steel-reinforced concrete, wherein the exposed reinforcing steel elements are derusted to bare metal, are primed with a corrosion inhibiting agent and are covered with a repair mortar, characterised in that the corrosion inhibiting agent comprises at least one flowable silicate and at least one metallic powder component of one or more metals, the normal potential of which is more negative than that of iron, and optionally inorganic fillers, and in that after the setting of the corrosion inhibiting agent the area to be made good is first wetted and then a cement bonding repair mortar is applied to the area to be made good.

2. A method according to Claim 1, characterised in that the repair mortar does not contain any additions of synthetic resin.